Europäisches Patentamt

**European Patent Office**

**Office européen des brevets**

(19)

(11) Veröffentlichungsnummer: **0 003 522**

**B1**

(12) **EUROPÄISCHE PATENTSCHRIFT**

(45) Veröffentlichungstag der Patentschrift: **09.06.82**

(51) Int. Cl.³: **B 29 C 17/02, B 65 D 6/00**

(21) Anmeldenummer: **79100186.0**

(22) Anmeldetag: **22.01.79**

(54) Verfahren zur Herstellung einer im Querschnitt rechteckigen rohrförmigen Verpackung sowie Vorrichtung zu seiner Durchführung.

(30) Priorität: **30.01.78 DE 7802690 U**
**29.04.78 DE 2819107**

(43) Veröffentlichungstag der Anmeldung:
**22.08.79 Patentblatt 79/17**

(45) Bekanntmachung des Hinweises auf die Patenterteilung:
**09.06.82 Patentblatt 82/23**

(84) Benannte Vertragsstaaten:
**BE CH DE FR GB LU NL SE**

(56) Entgegenhaltungen:
**DE - A - 1 454 926**
**DE - A - 1 704 277**
**DE - A - 1 942 976**
**FR - A - 1 422 117**
**US - A - 1 356 980**
**US - A - 2 703 514**
**US - A - 3 497 917**
**US - A - 3 978 190**
**US - A - 4 087 998**

(73) Patentinhaber: **HOECHST AKTIENGESELLSCHAFT**
**Postfach 80 03 20**
**D-6230 Frankfurt/Main 80 (DE)**

(72) Erfinder: **Reip, Horst**
**Flachsbühlstrasse 30**
**D-6204 Taunusstein 2 (DE)**
Erfinder: **Bingemann, Wilhelm**
**Lohmühlweg 19**
**D-6200 Wiesbaden (DE)**
Erfinder: **Hördler, Gisbert**
**Röntgenstrasse 34**
**D-6200 Wiesbaden (DE)**
Erfinder: **Fleischer, Hans**
**Dyckerhofstrasse 21**
**D-6200 Wiesbaden (DE)**
Erfinder: **Seibert, Wilhelm**
**Amöneburger Strasse 4**
**D-6200 Wiesbaden (DE)**
Erfinder: **Heller, Hans-Joachim**
**Konrad-Arndt-Strasse 34**
**D-6200 Wiesbaden (DE)**

Courier Press, Leamington Spa, England.

Verfahren zur Herstellung einer im Querschnitt rechteckigen rohrförmigen
Verpackung sowie Vorrichtung zu seiner Durchführung

Die Erfindung betrifft ein Verfahren zur Herstellung einer rohrförmigen, im Querschnitt rechteckigen Verpackung mit geraden, abgerundeten Längskanten, die aus thermoplastischer Kunststoffolie, insbesondere glasklarer thermoplastischer Kunststoffolie besteht, deren Öffnungen mit einem Boden — bzw. einem Deckelteil — verschließbar sind.

Es ist üblich, im Querschnitt kreisförmige Rohrkörper aus thermoplastischer Kunststoffolie, die als Verpackungen verwendet werden, in der Weise herzustellen, daß man in einem ersten Verfahrensschritt einen im Querschnitt kreisförmigen Rohrkörper mit gewünschtem Umfang aus Kunststoffolie herstellt; dazu wird von einer Vorratsrolle thermoplastische Kunststoffolie einer Diche von beispielsweise 100 bis 300 Mikron abgezogen und mit Hilfe eines bekannten Kalibrierdorns zu einem im Querschnitt kreisförmigen Rohrkörper geformt. Die überlappenden Bereiche des gebildeten Rohrkörpers werden dann durch Schweißen, Siegeln oder Kleben miteinander verbunden. Zur Herstellung des im Querschnitt kreisförmigen Rohrkörpers aus thermoplastischer Kunststoffolie kann man auch von einem rechteckigen Zuschnitt derselben ausgehen und diesen zu einem Rohrkörper mit kreisförmigen Querschnitt und mit überlappenden Kanten former und die sich überlappenden Folienteile durch Verklebung, Verschweißung oder Versiegelung miteinander verbinden.

In einem weiteren Verfahrensschritt werden die Öffnungsränder des Rohrkörpers erwärmt und gebördelt. Die Bördelung der Rohrkörper verbessert deren Formstabilität. Zur Vervollständigung der Verpackung wird jede Öffnung derselben durch einen kappenartig ausgebildeten Stülpdeckel verschlossen. Man kann die Verschlüsse auch dadurch bilden, daß man in den Hohlraum des Rohrkörpers Scheiben aus Karton einlegt, deren Abmessung der Querschnittsfläche des Rohrkörpers angepaßt ist, wobei die Kartonscheiben von der Bördelrolle des Rohrkörpers gehalten wird. Dieses bekannte Verfahren ist nur zur Herstellung von gebördelten Rohrziehpackungen mit kreisförmigem oder ovalem Querschnitt geeignet. Die bekannten Packungen der genannten Gattung lassen sich auch nicht raumsparend lagern oder transportieren.

In der DE—A 14 54 926 ist ein Verfahren zur Herstellung im Querschnitt rechteckiger Rohrkörper mit geraden Längskanten beschrieben. Bei diesem Verfahren geht man von einem im Querschnitt kreisförmigen Rohr aus thermoplastischer Kunststoffolie aus, führt sie in warmformbaren Zustand über und formt es durch von auf seine Außenseiten wirkende Preßkräfte in einen Rohrkörper mit rechteckigem Querschnitt um und läßt diesen dann abkühlen. Diese Druckschrift gibt keine Anregung, ein im Querschnitt kreisförmiges Rohr aus thermoplastischer Kunststoffolie in ein solches mit rechteckigem Querschnitt umzuformen.

Die DE—A 19 42 976 beschreibt ein Verfahren und eine Vorrichtung, mit dem bzw. mit der ein im Querschnitt kreisförmiger Rohrkörper aus gewickeltem Kunststoffband in einen solchen mit rechteckigem Querschnitt und abgerundeten Längskanten umwandelbar ist. Gemäß der bekannten Lehre wird ein im Querschnitt kreisförmiges Rohrstück in einem ersten Verfahrensschritt mit an sich gegenüberliegenden Seiten seiner Innenseite angreifenden, jeweils entgegengesetzt gerichtet wirkenden Kräfte beaufschlagt, die Spreizung des Rohrstücks bewirken; dabei werden die gesamten der Spreizkrafteinwirkung jeweils unterworfenen Wandbereiche des Rohres zugleich mit dieser von innen und außen mit Wärme beaufschlagt und verformt.

Die bezeichnete Spreizung des Rohrstückes mit zugleicher Wärmebeaufschlagung erfolgt mittels an sich gegenüberliegenden Bereichen der Rohrinnenseite angreifenden beheizten Spreizbacken (1), die gegen äußere, ebenfalls beheizte, zu den Spreizbacken gegengleich ausgebildeten Formteilen (2) gefahren werden, wobie die zusammenwirkenden Arbeitsflächen der Spreizbacken und der Arbeitsflächen der diesen jeweils zugeordneten Formteile jeweils konkav gekrümmte Außenseiten besitzen. Die zwischen den zusammenwirkenden Flächen der Spreizbacken (1) und der diesen zugeordneten entsprechenden Formteilen (2) liegenden Bereiche des Rohrkörpers werden dabei derart thermisch vorformt, daß diese jeweils konkav gekrümmte Außenseiten haben.

In einem zweiten Verfahrensschritt werden dann auf die parallel zueinander verlaufenden, durch die Spreizmaßnahme gemäß dem 1. Verfahrensanspruch in gespanntem Zustand gehaltenen Seitenflächen des Rohrkörpers auf deren gesamte, nach außen weisende Oberfläche jeweils Preßkräfte und zugleich Wärme zur Einwirkung gebracht; durch die Preßkräfte werden dei Seitenwandungen jeweils derart eingewölbt, daß ihre Innenseiten konvex gekrümmt sind.

Die Einwölbung erfolgt jeweils durch gegenläufig von- und zueinander bewegbaren beheizten Preßbacken (3), die in Querrichtung zur Bewegungsrichtung der Spreizbacken (1) bewegbar sind.

Nach Aufhebung der auf die Rohrwandung ausgeübten mechanischen Kräfte nimmt der Rohrkörper von selbst eine Raumform derart an, daß seine Wandungen paarweise parallel zueinander verlaufen.

Der Erfindung liegt die Aufgabe zugrunde, ein einfaches Verfahren zur Herstellung einer im Querschnitt rechteckigen rohrförmigen Verpackung aus thermoplastischer Kunststoffolie vorzuschlagen, bei dem zur permanenten Stabilisierung ihrer Form nur vergleichsweise sehr geringe schmale diskrete Bereiche der gesamten, die im Querschnitt rechteckige Verpackung bildenden Kunststoffolie durch Wärmeeinwirkung un warmformbaren Zustand gebracht und danach abgekühlt werden.

Die der Erfindung zugrundeliegende Aufgabe wird gelöst durch das in Anspruch 1 angegebene Herstellungsverfahren. Vorteilhafte Ausgestaltungen des Herstellungsverfahrens sind in den auf Anspruch 1 rückbezogenen abhängigen Ansprüchen offenbart. Zur Durchführung des erfindungsgemäßen Verfahrens ist die in Anspruch 4 angegebene Vorrichtung verwendbar.

Das erfindungsgemäße Verfahren hat gegenüber dem bekannten Verfahren den Vorteil, daß durch die Wärmebeaufschlagung der rohrförmigen Verpackung rechteckigen Querschnitts jeweils ausschließlich im Bereich seiner geradlinigen, gerundeten Längskanten ausgeschlossen ist, daß die Seitenwände unerwünscht schrumpfen und es dadurch zu Schwierigkeiten beim Bördeln der Rohrkörperränder kommt. Durch die bezeichnete Maßnahme wird auch verhindert, daß Glanz und Glätte der nach außen weisenden Oberflächen der planen Wandungen der rohrförmigen Verpackung beeinträchtigt werden; diese Gefahr besteht, wenn heiße Formelemente mit nicht absolut glatter Formfläche auf die glatte glänzende Oberfläche der rohrförmigen Verpackung einwirken und in diese dabei in unerwünschter Weise Oberflächenstrukturen einprägen, die nach Erkalten der Folie in dieser permanent fixiert sind und ihr ein unansehnliches Aussehen verleihen.

Zur Durchführung des erfindungsgemäßen Verfahrens sind thermoplastische Kunststoffolien aus Polyolefin, Celluloseacetat, Polystyrol, insbesondere aus weichmacherfreiem Polyvinylchlorid geeignet. Die Dicke der Folie liegt vorteilhaft im Bereich von 100 bis 150 $\mu$. Besonders vorteilhaft sind klarsichtige Folien.

Die Durchführung des Verfahrens wird nachfolgend beschrieben:

Man bildet zunächst in bekannter und vorstehend angegebener Weise aus Thermoplastischer Kunststoffolie, beispielsweise solcher aus weichmacherfreiem Polyvinylchlorid, ein im Querschnitt kreisförmiges Rohr bestimmter Länge. Im Überlappungsbereich der das Rohr bildenden Folie sind die überlappenden Teile miteinander verbunden, beispielsweise durch Verklebung.

Die Verbindung kann auch durch Verschweißung oder Versiegelung erfolgen.

Danach wird das im Querschnitt kreisförmige Rohr zu einem solchen mit rechteckigem Querschnitt und geradlinigen abgerundeten Längskanten geformt.

Die Bezeichnung rechteckige Rohrquerschnittsform unfaßt auch Rohre mit quadratischem Querschnitt.

Zur Umformung des im Querschnitt kreisförmigen Rohres geht man wie folgt vor:

Man läßt auf die Außenseiten sich gegenüberliegender Wandteile des Rohrstücks und jeweils in Richtung auf die Rohrachse plane Formelemente einwirken, die es in ein im Querschnitt rechteckiges Rohrstück umwandeln.

Die das Rohr bildende Kunststoffolie ist ausreichend flexibel und gibt den auftretenden Druckkräften nach.

Der gebildete Rohrkörper besitzt vier plane Seitenwandungen, die jeweils paarweise parallel zueinander verlaufen; er hat vier gerade Längskanten, die jeweils paarweise parallel zueinander verlaufen und jeweils gerundet ausgebildet sind. Im Bereich der abgerundeten Längskanten grenzen jeweils benachbarte plane Seitenwandungen des Rohrkörpers aneinander.

Die geraden Ränder an den Öffnungen des im Querschnitt rechteckigen Rohrkörpers verlaufen jeweils paarweise parallel.

Anschließend werden nur die abgerundeten Kanten des Formkörpers, jedoch nicht seine planen Seitenwandungen, mit Wärme beaufschlagt; vorteilhaft wird die nach außen weisende Oberfläche der abgerundeten Kanten erwärmt. Bei Verwendung von Folie aus Polyvinylchlorid zur Herstellung der Verpackung werden die angegebenen Kanten auf eine Temperatur von etwa 80°C oder darüber erwärmt.

Die Öffnungsränder des Rohrkörpers werden dann umgebogen und eingerollt.

Das Umbiegen und Einrollen der Öffnungsränder der rohrförmigen Verpackung erfolgt nach Erwärmung derselben in bekannter Weise. Anschließend wird der Rohrkörper abgekühlt. Das Abkühlen desselben wird vorzugsweise durch zusätzliche Maßnahmen, wie Beaufschlagung desselben mit Luft, beschleunigt.

Boden und Deckel in Form von Kappen oder Scheiben werden in bekannter Weise auf die gebördelten Öffnungsränder aufgebracht und beispielsweise durch Kleben, Siegeln oder Schweißen mit diesen verbunden.

Deckel und Boden sind in üblicher Weise der Querschnittsform und Fläche der Packung angepaßt, sie bestehen üblicherweise aus dem gleichen Material wie der Rohrkörper.

Vorteilhaft wird das Verfahren derart durchgeführt, daß die Längskanten der Verpackung einen Krümmungsradius von gleich oder kleiner 12 mm besitzen.

Die Verfahrensdurchführung erfolgt vorzugsweise derart, daß man die geradlinigen abgerundeten Längskanten des Rohrstücks und seine Öffnungsränder gleichzeitig erwärmt und nach Bördelung der Öffnungsränder den Rohrkörper abkühlt.

Die Vorrichtung gemäß der Erfindung unfaßt zwei voneinander weg sowie aufeinander zu bewegbare U-förmige Backen, deren freie Schenkel aufeinander zu gerichtet sind, wobei die Innenkanten der U-förmigen Backen abgerundet sind. Die Schenkelenden stehen sich im geschlossenen Zustand der Vorrichtung unmittelbar gegenüber.

Im Bereich der abgerundeten Innenkanten der U-förmigen Backen sind Kühl- bzw. Heizvorrichtungen angeordnet. Die Backen bilden zusammen in geschlossenem Zustand einen im Querschnitt rechteckigen Hohlraum.

In auseinandergefahrenem Zustand der Backen wird der im Querschnitt kreisförmige Rohrkörper von oben zwischen diese eingeführt.

Die Backen werden dann senkrecht zur Längsachse des Rohrkörpers auf diesen soweit zu bewegt, bis ihre freien Schenkelenden sich unmittelbar gegenüberstehen. Aufgrund der Nachgiebigkeit des den Rohrkörper bildenden Folienmaterials wird dieser dabei zu einem Rohrkörper mit rechteckigem Querschnitt geformt. Anschließend werden die geraden Längskanten des Rohrkörpers mit Hilfe der Heizeinrichtungen der Backen erwärmt. Die Oberfläche der Heizeinrichtungen ist zur Erzielung eines guten Kontaktes mit den abgerundeten Längskanten des im Querschnitt rechteckigen Rohrkörpers zwischen den Formbacken der Oberfläche der Längskanten desselben angepaßt. Die beheizung der angegebenen Heizeinrichtung der Backen erfolgt beispielsweise durch Zuführung von Öl oder Warmluft in diese oder mittels elektrischem Strom.

Insbesondere zeigen die Backen auf ihrer dem zylinderförmigen Körper zugewendeten Oberfläche, die vorzugsweise plan ist, Saugeinrichtungen, welche des Absaugen der zwischen der Oberfläche des zylinderförmigen Körpers und der anliegenden Backe vorhandenen Luft ermöglichen. Durch das Evakuieren wird der zu bearbeitende Körper in der Vorrichtung festgehalten. Durch des Verhindern von Lufteinschlüssen zwischen den Backen und dem zylinderförmigen Körper werden außerdem Deformierungen der geformten Körperoberflächen und der gebördelten Öffnungsränder vermieden.

Anstelle der genannten zwei U-förmigen Backen Können auch vier, im rechten Winkel zueinander angeordnete Backen vorhanden sein, welche aus vier, in rechtem Winkel zueinander stehenden Richtungen und senkrecht zu dessen Längsachse auf den zylinderförmigen Körper einwirken.

Der durch die genannten Backen und die Heizeinrichtungen gebildete Hohlraum wird an den beiden, einander gegenüberliegenden Stirnseiten durch jeweils eine Bördelstation begrenzt, welche beispielsweise durch Öl, Warmluft oder elektrischen Strom aufgeheizt ist. Die Bördelstation zeigt auf ihrer Oberfläche eine linienförmige Vertiefung, welche sich in üblicher Weise parallel und identisch mit dem zu bördelnden Umfangsrand erstreckt. Diese Vertiefung zeigt auch den üblichen in etwa halbkreisförmigen Querschnitt; ihre Breite entspricht dem Durchmesser der zu erzeugenden Bördelrolle. Tritt die genannte Vertiefung der Bördelstation mit dem Umfangsrand des geformten Körpers in Kontakt, wird das Folienmaterial nur im Bereich der Öffnungsränder erwärmt. Durch weiteres Annähern in die Vertiefung wird der Folienrand gekrümmt, umgebogen und eingerollt. Neben der Vertiefung der Bördelstation sind erfindungswesentliche Halteelemente angebracht, welche die Oberfläche des geformten Körpers in der Nähe seines zu bördelnden Umfangsrandes abstützen.

Die Erfindung wird anhand der Figuren 1 bis 5 erläutert.

Fig. 1 stellt eine nach dem erfindungsgemäßen Verfahren herstellbare Verpackung in perspektivischer Ansicht dar.

Fig. 2 zeigt eine Ausführungsform der erfindungsgemäßen Vorrichtung im Schnitt entlang der Linie E—F der Fig. 5.

Fig. 3 stellt die Vorrichtung der Fig. 2 entlang der Linie C—D dar.

Fig. 4 zeigt die Vorrichtung im Schnitt entlang der Linie G—H der Fig. 3.

Fig. 5 stellt die Vorrichtung im Schnitt entlang der Linie A—B der Fig. 2 dar.

Die Bezugsziffern bezeichnen in allen Figuren jeweils identische Elemente.

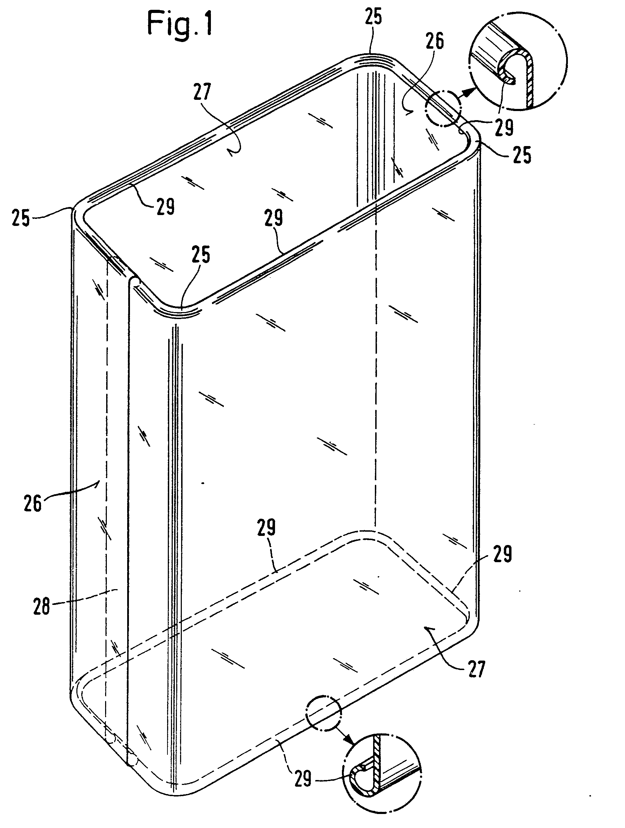

Das in Fig. 1 in perpsektivischer Ansicht gezeigte Verfahrenserzeugnis besteht aus einer im Querschnitt rechteckigen rohrförmigen Verpackung mit abgerundeten Längskanten 25 und parallel zueinander verlaufenden schmaleren planen Seitenwänden 26 sowie parallel zueinander verlaufenden planen breiteren Seitenwänden 27.

Die Verpackung zeigt eine Längsnahtverklebung 28 und eine nach innen gerichtete Bördelung 29. Deckel und Boden sind zu besseren Übersicht nicht eingezeichnet.

Die Krümmungsradien der abgerundeten Kanten 25 sind im wesentlichen konstant, sie weisen keine Aus- oder Einbuchtungen auf.

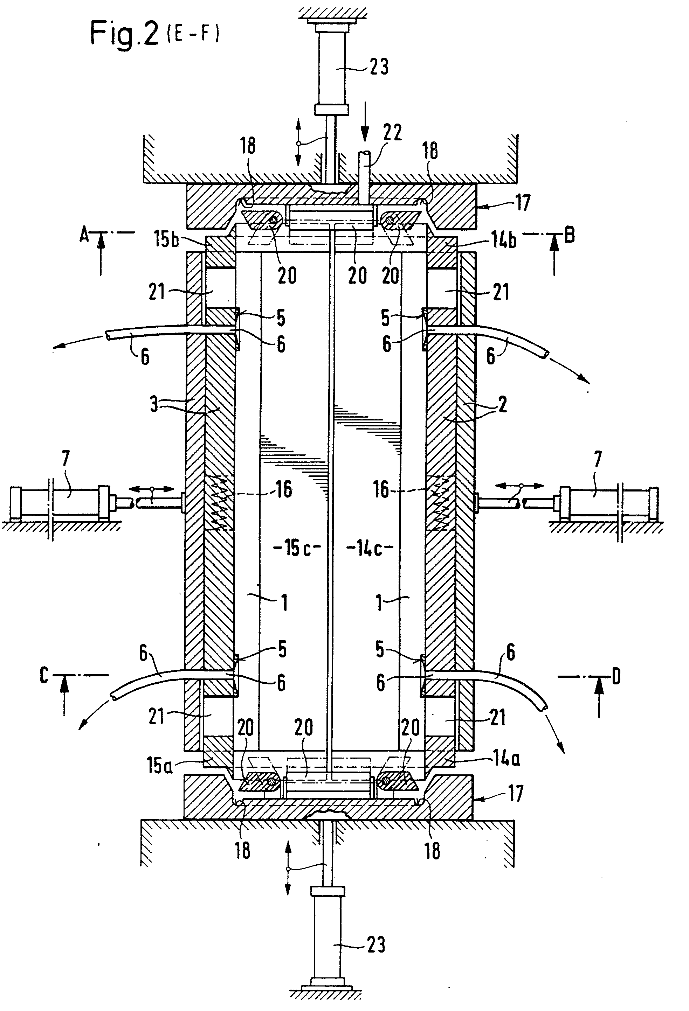

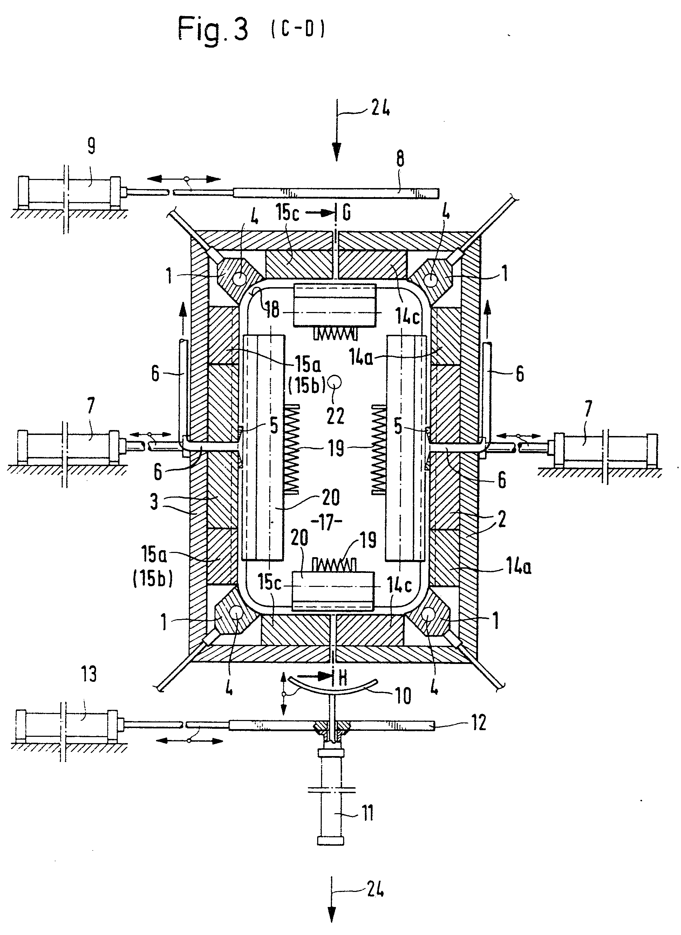

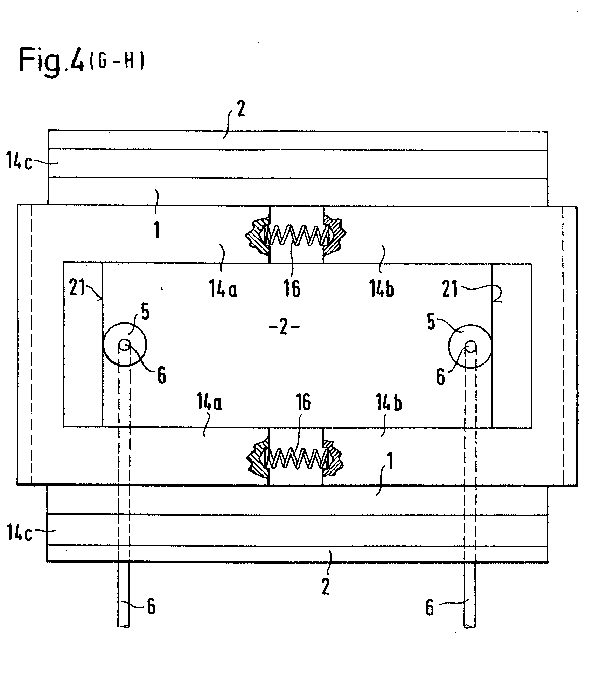

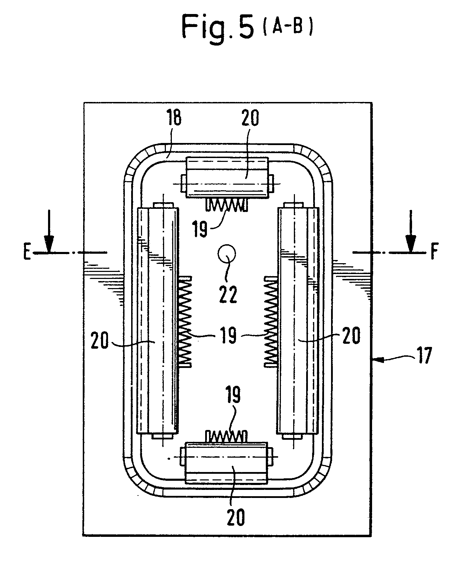

Bei der Durchführung des Verfahrens mit der in den Figuren 2 bis 5 dargestellten Vorrichtung werden die U-förmigen Backen 2, 3 derselben die Backenteile 14a/b/c und 15a/a/b/c jeweils durch Druckluftzylinder 7 voneinander weg bewegt, so daß der Innenraum der Vorrichtung zugänglich wird. Ein im Querschnitt kreisförmiger Rohrkörper wird nach Wegschieben des Schiebers 8 durch den Druckluftzylinder 9 in Richtung des Pfeiles 24 in den Innenraum der Vorrichtung eingeführt. Das Element 10 word gleichzeitig durch den Druckluftzylinder 11 in den Innenraum der Vorrichtung bewegt und trägt den zylinderförmigen Körper. Beim Verschließen des Innenraums der Vorrichtung durch die Bewegung ihrer Backen 2, 3 aufeinander zu, wird durch die Einrichtung 5 mit dem Kanal 6 Luft abgesaugt, so daß der Rohrkörper durch die Einrichung festgehalten wird. Das als Auflage dienende Element 10 wird vor dem Verschließen des Innenraums der Vorrichtung derart, daß die Enden der freien Schenkel der U-förmigen Backen 2, 3 unmittelbar aneinandergrenzen, durch den Druckluftzylinder 11 in die Ausgangslage zurückgefahren. Die über den Anschluß 22 eingepreßte Luft drückt den Rohrkörper gegen die Innenseiten der Backen 2, 3. Die abgerundeten Kanten des wie vorstehend geformten im Querschnitt rechteckigen Hohlzylinderkörpers im geschlossenen Innenraum der Vorrichtung werden durch Heizelemente 1 mit Durchflußbohrungen 4 für Heizmittel erwärmt. Gleichzeitig werden die beiden Bördelstationen 17 durch Druckluftzylinder 23 in Richtung der zu bördelnden Umfangsränder des Rohrkörper bewegt.

Hierbei werden dei beweglichen inneren Backenteile 14a und 14b bzw. 15a und 15b jeweils aufeinander zu bewegt. Das Langloch 21 dient dabei als Bewegungsraum für die verschiebbar ausgebildeten Backenteile. Die zu bördelnden Offnungsränder des Rohrkörpers werden in die aufheizbaren sowie aufgeheizten Vertiefungen 18 mit halbkreisförmigem Querschnitt gedrückt und dabei eingerollt; hierbei wird der Bereich der Öffnungsränder durch Halteelemente 20 abgestützt. Nach Abkühlung des Rohrkörpers werden die beiden Bördelstationen 17 von dem jeweiligen Öffnungsrand entfernt; dabei klappen die Halteelemente 20 in Ritchung des gebördelten Rohrkörpers, ohne dessen gebördelten Öffnungsrand zu verletzen und werden danach durch Federn 19 in ihre Ausgangslage zurückgeholt. Ebenso werden die beweglichen Backenteile 14a/b und 15a/b durch Federn 16 in ihre vorhergende Lage zurückgeführt. Die U-förmigen Backen 2, 3 werden nun wieder voneinander weg bewegt und das Element 10 mit dem Schieber 12 sowie dem Druckluftzylinder 13 zur Seite bewegt, so daß der im Querschnitt rechteckige Rohrkörper in Richtung des Pfeiles 24 aus dem Innenraum der Vorrichtung entfernt werden kann.

Der im Querschnitt kreisförmige Rohrkörper wird vorzugsweise im freien Fall in die Vorrichtung eingeführt, der im Querschnitt rechteckige Rohrkörper vorzugsweise im freien Fall aus dieser entfernt.

Die durch das erfindungsgemäße Verfahren und mit der angegebenen Vorrichtung herstellbare rohrförmige Verpackung der angegebenen Form läßt sich besonders raumsparend lagern, wobei pro Lagerfläche eine relativ große Warenmenge verpackt gelagert werden kann.

## Patentansprüche

1. Verfahren zur Herstellung eines Rohrstückes mit rechteckigem Querschnitt als Mantel für einen Verpackungsbehälter, bei dem man von einem vorgefertigten, im Querschnitt kreisförmigen Rohrstück aus warmformbarem Werkstoff ausgeht, es durch Einwirkung mechanischer Kräfte, die jeweils auf sich gegenüberliegenden Seiten (26, 27) seiner Oberfläche und jeweils im rechten Winkel zur Rohrstücklängsachse wirken, in ein solches mit zwei parallelen planen Seitenwänden umwandelt, es in dieser Form festhält und der Einwirkung von Wärme unterwirft und dann abkühlen läßt, dadurch gekennzeichnet, daß man von einem Rohrstück aus Kunststoffolie, das eine gerade längsaxiale Überlappungsnaht (28) besitzt, ausgeht, es durch auf die Außenseiten sich gegenüberliegender Wandteile des Rohrstückes und jeweils in Richtung auf die Rohrlängsachse einwirkende plane Formelemente in ein Rohrstück mit vier planen Wandungen (26, 27), von denen sich jeweils zwei parallel gegenüberliegen, und das geradlinige längsverlaufende abgerundete Kanten (25) besitzt, umgewandelt wird, wonach die abgerundeten Kanten, jedoch nicht die planen Seitenwandungen (26, 27), mit Wärme beaufschlagt und anschließend abgekühlt werden.

2. Verfahren nach Anspruch 1, dadurch gekennzeichnet, daß gleichzeitig mit der Erwärmung der geradlinigen abgerundeten Längskanten (25) die Öffnungsränder des im Querschnitt rechteckigen Rohrstückes erwärmt und danach eingerollt und es danach abgekühlt wird.

3. Verfahren nach Anspruch 1 oder 2, dadurch gekennzeichnet, daß die geradlinigen abgerundeten Längskanten (25) mit einem Krümmungsradius von gleich oder kleiner als 12 mm geformt werden.

4. Vorrichtung zur Formung eines Rohrstückes mit kreisförmigem Querschnitt in ein solches mit rechteckigem Querschnitt und abgerundeten Längskanten (25), das zwei voneinander weg- sowie aufeinander zu-bewegbare U-förmige Backen (2, 3) besitzt, deren freie Schenkel aufeinander zu gerichtet sind, wobei die Innenkanten der U-förmigen Backen abgerundet sind, dadurch gekennzeichnet, daß zur Durchführung des Verfahrens nach Anspruch 1 die Schenkelenden der U-förmigen Backen (2, 3) sich in geschlossenem Zustand der Vorrichtung unmittelbar gegenüberstehen, wobei im Bereich der abgerundeten Innenkanten der U-förmigen Backen Kühl- bzw. Heizvorrichtungen (1, 4) angeordnet sind.

## Claims

1. A process for the manufacture of a length of tubing with rectangular cross-section, for use as a jacket for a packaging container, starting out from a pre-fabricated length of tubing with circular cross-section of a thermoformable material, which is subjected to mechanical forces acting on opposite sides of its surface and at right angles with respect to its longitudinal axis, so as to convert it into a length of tubing in which two planar side walls each are parallel to one another, the length of tubing being retained in this shape, subjected to the action of heat and then allowed to cool, characterised in that the starting material used is a length of tubing comprising a plastic film and having a straight overlapping seam in the direction of its longitudinal axis, which is converted into a length of tubing with four planar walls, in which two opposite walls each are parallel to one another and which has straight, longitudinally extending rounded edges, by means of planar shaping elements acting on the outside surfaces of opposite wall portions of the length of tubing in each case in the direction of its longitudinal axis, the rounded edges of the length of tubing, but not the planar side walls, being subsequently heated and then cooled.

2. A process as claimed in claim 1, in which the rims at the openings of the length of tubing with rectangular cross-section are heated simultaneously with the straight rounded longitudinal edges and are then curled and the length of tubing is thereafter cooled.

3. A process as claimed in claim 1 or claim 2, in which the straight, rounded longitudinal edges are formed to have a radius of curvature which is equal to or smaller than 12 mm.

4. A device for converting a length of tubing with circular cross-section into a length of tubing with rectangular cross-section and rounded longitudinal edges, equipped with two U-shaped jaws which can be moved away from one another and towards one another, with the free legs of the U-shaped jaws facing one another and their inside edges being rounded, in which, for performing the process according to claim 1, the ends of the legs of the U-shaped jaws are directly opposite to one another when the device is in the closed position and in which cooling and heating means, respectively, are arranged in the area of the rounded inside edges of the U-shaped jaws.

**Revendications**

1. Procédé pour la fabrication d'un corps tubulaire à section transversale rectangulaire qui est utilisable comme revêtement d'un conteneur de transport, et pour la fabrication duquel on part d'un corps tubulaire préfabriqué, en matériau thermoplastique, à section transversale circulaire, que l'on expose à l'action de forces mécaniques qui agissent perpendiculairement à l'axe longitudinal du corps tubulaire, sur la face extérieure de chacun des côtés diamétralement opposés, que l'on transforme ensuite en corps tubulaire comportant deux parois latérales planes et parallèles, et que l'on maintient sous cette forme sur laquelle on fair agir une source de chaleur et qu'on laisse finalement refroidir, caractérisé en ce que l'on part d'un corps tubulaire réalisé à partir d'une feuille en matière plastique, qui comporte une plage d'assemblage par recouvrement parallèle à l'axe longitudinal, et que l'on transforme, sous l'action d'éléments de profilage à surfaces planes, agissant sur les faces extérieures des parois diamétralement opposées et en direction de l'axe longitudinal du tube, en un corps tubulaire qui comporte quatre faces planes et parallèles deux par deux, et qui présente des arêtes rectilignes arrondies s'étendant dans le sens longitudinal, sur lesquelles on fait agir une source de chaleur, en évitant de chauffer en même temps les parois planes latérales, et qu'on laisse finalement refroidir.

2. Procédé selon la revendication 1, caractérisé en ce qu'on procède simultanément au chauffage des arêtes rectilignes arrondies, ainsi qu'au chauffage des bords des ouvertures du corps tubulaire à section transversale rectangulaire, que l'on recourbe ensuite et qu'on laisse finalement refroidir.

3. Procédé selon l'une des revendications 1 ou 2, caractérisé en ce que le rayon de courbure des arêtes rectilignes arrondies est égal ou inférieur à 12 mm.

4. Installation pour la transformation d'un corps tubulaire à section transversale circulaire en un corps tubulaire à section transversale rectangulaire doté d'arêtes longitudinales arrondies et comportant deux mâchoires en forme d'U qui se déplacent en se rapprochant et en s'éloignant l'une de l'autre, et dont les jambes libres sont placées face à face l'une de l'autre, alors que les arêtes intérieures de ces mâchoires en forme d'U présentent une forme arrondie, installation caractérisée en ce que, pour réaliser le procédé défini dans la revendication 1, les extrémités des jambes des mâchoires en forme d'U se trouvent placées, en position de fermeture de l'installation, bout-à-bout l'une en face de l'autre, et en ce que les arêtes intérieures arrondies de ces mâchoires en forme d'U sont équipées d'installations de chauffage et de refroidissement.

## Fig.1

# Fig.2 (E-F)

# Fig. 3 (C-D)

Fig.4 (G–H)

# Fig. 5 (A-B)